Europäisches Patentamt

European Patent Office

Office européen des brevets

(19)

(11) Publication number: **0 272 075 B1**

## (12) EUROPEAN PATENT SPECIFICATION

(45) Date of publication of patent specification: **24.07.91**

(51) Int. Cl.⁵: **F16L 58/00**, F16L 55/00, F16L 1/16

(21) Application number: **87311000.1**

(22) Date of filing: **15.12.87**

(54) **Protection of joints in elongate substrates.**

(30) Priority: **15.12.86 GB 8629938**

(43) Date of publication of application:
**22.06.88 Bulletin 88/25**

(45) Publication of the grant of the patent:
**24.07.91 Bulletin 91/30**

(84) Designated Contracting States:
**DE FR GB IT NL**

(56) References cited:
**EP-A- 0 079 610**
**DD-A- 130 071**
**FR-A- 2 341 811**

(73) Proprietor: **N.V. RAYCHEM S.A.**
**Diestsesteenweg 692**
**B-3200 Kessel-lo(BE)**

(72) Inventor: **John, Robin Christopher**
**11, Middleberry Lane**
**Los Altos California 94022(US)**
Inventor: **Van Beersel, Jozef Frans Louisa**
**Hollebeekstraat 121**
**B-2690 Temse(BE)**

(74) Representative: **Auckland, Jacqueline et al**
**Raychem Limited Intellectual Property Law**
**Department Faraday Road Dorcan**
**Swindon, Wiltshire SN3 5HH(GB)**

## Description

This invention relates to the protection of joints in elongate substrates and more particularly to the protection of welded joints in submerged, weight-coated pipelines.

Submerged weight-coated pipelines are usually installed by a purpose-built offshore vessel known as a laybarge. In a typical operation, twelve metre long steel pipes are coated onshore with an anti-corrosion coating, for example, coaltar enamel, asphalt, or a fusion-bonded epoxy coating, leaving a bare section at each end of the pipe to allow subsequent welding of adjacent lengths to take place without contamination or coating damage. This bare area normally extends up to 250 mm from each end of the pipe. In the next stage, the weight coating, which is usually a mixture of concrete and iron oxide, is applied over the anti-corrosion coating to a thickness of from about 25 mm to about 150 mm, depending upon the degree of negative buoyancy required. The weight coating is also cut-back from the pipe ends to expose the bare section of pipe and about 200 mm of the anti-corrosion coating, in order to allow subsequent overlap and completion of weld area corrosion protection.

On the laybarge the coating pipes are strung together, aligned, welded, and the welds x-ray inspected. An anti-corrosion layer is then applied over the welded region which may, for example be a sealant-coated tape, but is preferably a heat-recoverable wraparound sleeve, such as that sold by Raychem Corporation under the trade mark Thermofit WPC™. Finally the joint area is mechanically protected, to restore the weight coating at the joint, and to protect the joint from mechanical damage during subsequent operations.

Typically the laybarge is divided into a number of work stations each carrying-out a specific function at a pipe joint area. The completed pipelines leaves the rear of the laybarge and encounters a series of rollers and guides which assist, correct and control entry of the pipeline into the sea, river or lake. This collection of rollers and guides, known as the stinger, is towed along by the laybarge and is subjected to any sea movements or wave impacts, hence the pipeline supported by the stinger is itself buffeted about and impacts with the rollers and guides, particularly in rough weather. Such impacts can be severe and could result in damage to the joint area weight coating and exposed anti-corrosion coating if no mechanical protection system were to be employed.

Owing to the high cost of operating a fully equipped laybarge all operations must be carried-out quickly and efficiently, with no single station taking more than 8 minutes to complete its elected task. Various mechanical protection systems for welded pipe joints have been proposed and are commercially available. The most common system involves the use of hot marine mastic, an asphalt/bitumen based material reinforced with aggregate. This marine mastic, which is normally supplied in blocks which have first to be broken up, is fed into a large heated hopper and maintained at a temperature between 180°C and 240°C, at which the marine mastic is in a molten/fluid state. The hopper is positioned at the last working station on the laybarge, directly above the pipeline joint. A single, flat metal sheet is wrapped around the joint area, overlapping the adjacent weight coating, and onto itself to form a mould. Steel straps are attached to the mould and tightened to hold the mould in place. The hot marine mastic from the hopper is introduced through a hole cut in the top of the sheet mould and fills up the annulus formed by the mould. The hole is then sealed by means of a metal sheet that is held in place by means of straps.

The marine mastic system has many disadvantages, namely:-

- Storage and handling of marine mastic blocks, sheet steel and gas (for heating), and breaking of the mastic blocks occupies valuable laybarge space and requires handling personnel.
- Heating of marine mastic takes time and temperature control requires careful monitoring. If too cold it will not flow properly, if too hot it can damage certain types of corrosion protection materials used at the weld area.
- The hot marine mastic gives off smoke and harmful fumes.
- Should the hot marine mastic come into contact with the skin, severe burns will result.
- Marine mastic often leaks from the sides of the mould due to inadequate tightening of the steel straps. Hence the mould will not fill-up completely.
- As the marine mastic takes considerable time to cool down to a solid state, its impact resistance is not fully developed by the time the joint is exposed to stinger forces. Forced cooling using sea water is often necessary.
- Should the X-ray inspection film of a weld indicate a flaw within the weld that requires repair, marine mastic may already have been poured. In this case the joint area is difficult to re-enter and clean-up.
- After the pipeline has been laid on the sea bed, any damage or corroded metal casing can present problems for fishing nets.

One example of a hot mastic approach is described in EP-A-0079610 where a covering is formed on a joint between covered steel pipes each having a protecting concrete layer by first wrapping a heat-shrinkable sheet of low temperature shrinkage temperature around the joint, then installing a metal tube around the joint to form a closed space around the joint, and finally pouring fused mastic into an opening in the metal tube, the mastic shrinking the shrinkable sheet and solidifying to form a covering protecting layer.

Another mechanical protection system for joints which is available involves the use of polymer-cement in-fill systems instead of hot marine mastic. Yet another system uses special liquids that foam-up to fill in the annular space between pipe and mould. Again special chemicals must be correctly stored and then mixed using sophisticated application equipment requiring skilled operators.

It has long been recognised that there is a need for a joint protecting system which obviates the deficiencies of the known techniques. We have now discovered a system in which the function of mechanical protection is fulfilled by a hollow enclosure and the weight coating comprises a fluid.

According to one aspect of the present invention there is provided a method of protecting a joint between two corrodible, weight coated elongate substrates which have been bared of weight coating in the joint region, the method comprising;

    (i) surrounding the joint region with a hollow enclosure, and

    (ii) securing the enclosure to the elongate substrate so that an annular space is formed around the joint region, there being at least one port for entry and exit of fluid into the annular space, characterised in that the method also comprises

    (iii) positioning an anode on one of the substrates outside the enclosure, and

    (iv) submerging the joint region into sea water so that the sea water enters and substantially fills the annular space, contacting any exposed parts of the corrodible substrates, and allowing passage of a cathodic protection current to said exposed parts.

In another aspect the invention provides a corrosion protecting arrangement of a joint between two corrodible, weight-coated elongate substrates which have been bared of weight coating in the joint region, the arrangement comprising an enclosure secured to the elongate substrate around the joint region, and the joint region being immersed in sea water, charactertised in that the enclosure secured to the substrate is hollow and contains at least one port such that sea water enters and leaves the enclosure contacting any exposed parts of the corrodible substrates, and allowing passage of a cathodic protection current to said exposed parts, and in that an anode is positioned on one of the elongate substrates outside the enclosure.

The invention will now be more specifically described with respect to joints in submarine pipelines although it is to be understood that it is not limited thereto and may for example be applicable to submarine cable and other submerged or buried structures.

The surrounding hollow enclosure preferably comprises a pair of rigid, semi-cylindrical half-shells, although a wraparound sleeve may possibly be used in less demanding situations. The half-shells are preferably formed from a non-corrodible material and should be able to withstand the mechanical forces to which the joint region will be exposed. Suitable materials for the half-shells include, for example polymer materials such as polyethylene, polypropylene, polyester, polyamide or expoxy material, which may be reinforced with for example glass fibres as required.

Preferably the half-shells are of an internal diameter such that they fit snugly over the weight coating on each side of the joint region, and of a length such that they overlap the weight coating by from about 50 to 150 mm. The wall thickness of the half-shells will depend to some extent on the material and the pipeline diameter, but will usually be from 10 to 30 mm, preferably about 20 mm.

The half-shells may be secured to the adjacent pipeline weight coating by suitable mechanical devices, for example straps or tie-wraps, but preferably they are secured by means of heat recoverable sleeves, which are shrunk down over the end regions of the half-shells and the adjacent weight coating. The sleeves, which are preferably internally coated with a sealing material, preferably an adhesive such as a hot melt adhesive or a sealant such as a mastic, need to be able to withstand severe mechanical handling and are therefore preferably formed from a heat recoverable fabric. Suitable heat-recoverable fabrics are described in US-3669157, EP-A-115905, EP-A-116390, EP-A-116391, EP-A-116392, EP-A-116393, EP-A-117025, EP-A-117026, EP-A-118260, EP-A-137648, EP-A-153823, EP-A-175554 and European Patent Application no. 86303767.7. A preferred heat-recoverable fabric is that sold by Raychem Corporation under the trade mark Rayfort™. Very good results have been obtained using sleeves formed from Rayfort™ fabricand sold by Raychem Corporation under the trade mark SZAR™.

The half-shells may be provided with one or more holes which serve as ports for the entry and exit of a fluid, usually water, in which the pipeline is immersed. However, preferably the half-shells are so constructed that, when placed around the pipe, the longitudinal edges of the half-shells do not quite meet, thus leaving a slot or slots extending for the length of the joint region. Preferably a slot is from 10 to 100mm, and more preferably from 25 to 50 mm in width. An advantage of this arrangement is that it enables the half-shells to accommodate small variations in the diameter of the weight coating of the pipeline, which will merely result in small differences in the width of the slot.

A significant advantage of the use of a noncorroding enclosure in accordance with the invention is that it enables the enclosure to be marked so that divers or mechanical devices inspecting the pipeline can recognise and identify each individual joint.

Thus, in another aspect, the invention provides a joint according to the invention, in a submerged pipeline, that is provided with an enclosure having visible or recognisable identification means.

Such means may comprise, for example, a joint marking patch which preferably comprises a material that resists fouling by marine organisms. A suitable material is copper, and for example the patch may comprise copper identification markings carried on a polymer backing. The backing may be fixed to the enclosure by means of an adhesive, or by tying, clamping or magnetic devices. A preferred marking patch comprises copper shapes, for example studs, partially embedded in a surface of a polymer backing sheet, the backing optionally being coated on its opposite surface with an adhesive, preferably a hot melt adhesive. Such marking patches are new articles and are accordingly included within the scope of the invention. The marking patches may have a variety of uses and may be attached to any suitable underwater structure such as platform or rig support legs, pipelines, risers, valves and flanges.

The invention will not be illustrated by way of example with reference to the accompanying Drawings in which:

Figure 1 shows a joint region in side elevation prior to the attachment of the enclosure;

Figure 2 shows the joint region in part sectional side elevation, with the enclosure in position;

Figure 3 shows the joint region in plan view with the enclosure secured to the pipeline; and

Figure 4 shows a joint marking patch in sectional side elevation.

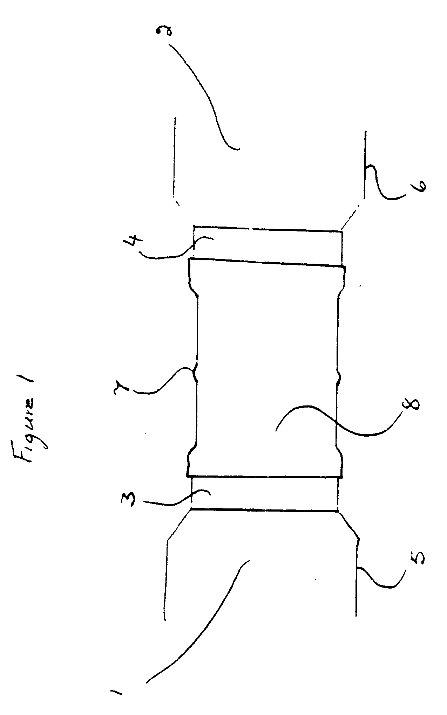

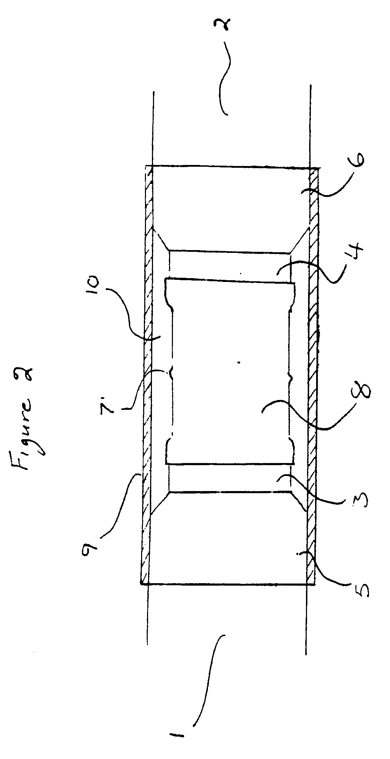

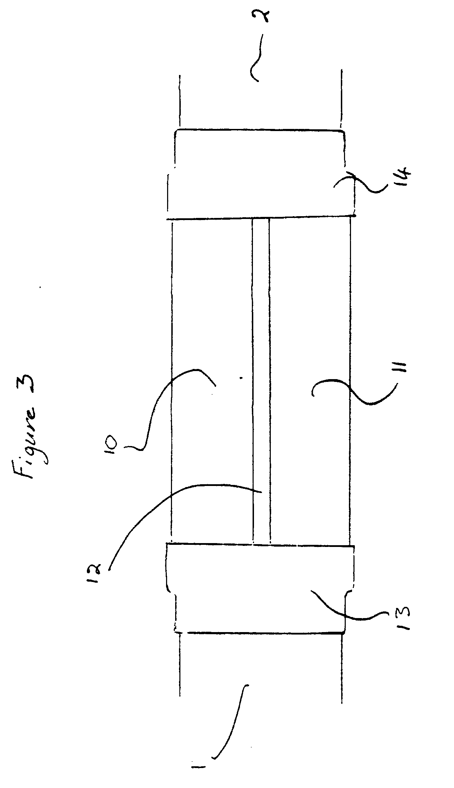

Referring now to the Drawings, the joint region in Figure 1 comprises two steel pipes 1 and 2, having anti-corrosion coatings 3 and 4, and weight coatings 5 and 6. The anti-corrosion coatings and the weight coatings are cut back to expose lengths of bare pipe which are welded at 7. A heat recoverable wraparound sleeve 8 internally coated with a mastic, sold by Raychem Corporation under the trade mark Thermofit WPC™, is shrunk over the weld and overlaps the anti-corrosion coatings on each side of the weld. The wraparound sleeve may be provided with an adhesive patch closure, or a suitable mechanical closure, for example a rail and channel closure. Figure 2 shows the joint with the enclosure 9 in position, leaving an annular space 10 around the joint region. From Figure 3 it can be seen that the enclosure comprises a pair of half-shells 10 and 11 which are sized such that when placed over the joint region a gap 12 is left between their longitudinal edges. The half-shells are secured to the pipes with heat recoverable fabric sleeves 13 and 14, which are sold by Raychem Corporation under the trade mark Rayfort™. The sleeves 13 and 14 are internally coated with a hot-melt adhesive to provide greater shear strength to prevent the casing from sliding along the pipe. The sleeves also round off the edges of the half-shells, thus allowing the enclosure to ride more easily over the rollers of the stinger. Any tightening straps or adhesive tape used to hold and compress the two half-shells together can be left on the casing to assist mechanical strength during the laying operation, if these subsequently corrode or rot away, this will be of no consequence as the heatshrink sleeves will permanently hold the casing in place.

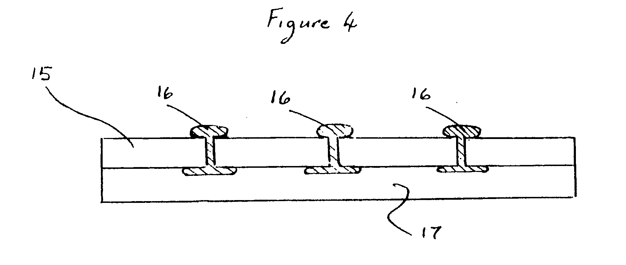

A joint marking patch (or plate) as shown in Figure 4 can be used for identification of any particular joint and can be pre-installed on one shell or installed immediately after recoverable sleeve installation. The marking patch consists of a cross-linked polymer or other plastic sheet 15 into which any number of copper metal studs 16 are embedded with the heads proud of the sheet upper surface. Any desired identification of numbers/letters/symbols can be obtained by installing the copper studs according to the required pattern. During subsea service the copper heads will prevent marine growth attachment and will therefore be permanently visible to divers or subsea inspection vehicles. The under surface of the polymer sheet is precoated with a suitable heat activated adhesive 17 which will bond to the half-shells wall material when the patch is heated (usually by gas torch). For existing subsea constructions or for constructions other than pipeline joints, the identification patch can be installed by tieing, clamping, using contact type adhesives or by incorporating magnetic devices within the polymer matrix which then automatically attach the patch to any steel surface.

As the completed pipeline leaves the laybarge, sea water will enter the joint annulus through the gaps between the two half-shells, expelling all air and thereby adding to the negative buoyancy of the entire pipeline. Furthermore as all sections of the anti-corrosion coating beneath the joint enclosure are now directly in contact with sea water, cathodic protection current from anodes (normally installed on such submarine pipelines) can flow through the gaps 12 directly to any anti-corrosion coating flaws, thereby providing the perfect conditions for effective cathodic protection.

Although the weight of water which fills the joint region will normally be sufficient to provide enough negative or neutral buoyancy, it may on occasions be necessary to add to the joint region a heavier medium such as sand, gravel. In this case the two half-shells can be installed with the bottom joint section closed together, leaving only the top section open to allow entry of such media.

The method of this invention does not require special storage, high temperature melting or handling of hazardous or shelf life sensitive materials. The method requires no mixing or complex equipment in order to complete a fast, easy and high quality installation. Once installed the system can easily be re-entered should a weld need repair. Within a few minutes after completion the system reaches its maximum mechanical strength prior to contact with the stinger. The system allows cathodic protection current to reach directly any coating flaws and does not contain any corrodeable metallic parts that could damage fishing nets. Each joint can be permanently marked with an individual identification mark which is unaffected by marine growth or corrosion, thereby allowing a diver to identify any specific joint and also confirm his own position on the sea bed.

## Claims

1. A corrosion protecting arrangement of a joint between two corrodible, weight-coated elongate substrates which have been bared of weight coating in the joint region, the arrangement comprising an enclosure secured to the elongate substrate around the joint region, and the joint region being immersed in sea water, charactertised in that the enclosure secured to the substrate is hollow and contains at least one port such that sea water enters and leaves the enclosure contacting any exposed parts of the corrodible substrates, and allowing passage of a cathodic protection current to said exposed parts and in that an anode is positioned on one of the elongate substrates outside of the enclosure.

2. An arrangement according to claims 1 wherein the enclosure comprises polymeric material.

3. An arrangement according to any one of claims 1 to 2, wherein the corrodible substrates also carry an anticorrosion coating under the weight coating, the anticorrosion coating also have been bared in the joint region, but extending partly beyond the bared weight coating within the enclosure, the arrangement comprising an additional anticorrosion layer in the form of a heat recoverable sleeve recovered directly over the joint between the pipes, wherein the sea water allows passage of the cathodic protection current to any flaws in any of the anticorrosion coatings.

4. An arrangement according to any preceding claim, wherein the elongate substrate comprise submerged pipelines, preferably submerged submarine pipelines.

5. An arrangement according to any preceding claim, in which the enclosure is secured to the elongate substrate by means of heat shrinkable sleeve.

6. An arrangement according to claim 5, in which the enclosure comprises a heat shrinkable material.

7. An arrangement according to claim 5 or 6, in which the enclosure is coated on the surface facing the substrate with a layer of sealing material.

8. An arrangement according to any preceding claim, in which the port is in the form of a slot extending substantially longitudinally of the enclosure.

9. An arrangement according to claim 2 or any claim dependant thereon, wherein the polymeric enclosure is marked with visible or recognisable identification means.

10. A method of protecting a joint between two corrodible, weight coated elongate substrates which have been bared of weight coating in the joint region, the method comprising:

(i) surrounding the joint region with a hollow enclosure, and

(ii) securing the enclosure to the elongate substrate so that an annular space is formed around the joint region, there being at least one port for entry and exit of fluid into the annular space, characterised in that the method also comprises

(iii) positioning an anode on one of the substrates outside the enclosure, and

(iv) submerging the joint region into sea water so that the sea water enters and substantially fills the annular space, contacting any exposed parts of the corrodible substrates, and allowing passage of a cathodic protection current to said exposed parts.

## Revendications

1. Dispositif de protection contre la corrosion d'une jonction entre deux substrats allongés corrodables, portant un revêtement de lestage, qui ont été débarrassés du revêtement de lestage dans la zone de jonction, le dispositif comprenant un boîtier fixé au substrat allongé autour de la zone de jonction, et la zone de jonction étant immergée dans l'eau de mer, caractérisé en ce que le boîtier fixé au substrat est creux et contient au moins un orifice permettant à l'eau de mer de pénétrer dans, et de quitter, le boîtier en venant en contact avec toutes les parties exposées des substrats corrodables et en permettant le passage d'un courant de protection cathodique jusqu'aux parties exposées, et en ce qu'une anode est positionnée sur l'un des substrats allongés à l'extérieur du boîtier.

2. Dispositif suivant la revendication 1, dans lequel le boîtier comprend une matière polymérique.

3. Dispositif suivant la revendication 1 ou 2, dans lequel les substrats corrodables portent également un revêtement anticorrosion sous le revêtement de lestage, le revêtement anticorrosion ayant été également mis à nu dans la zone de jonction mais s'étendant partiellement au-delà du revêtement de lestage mis à nu à l'intérieur du boîtier, le dispositif comprenant une couche anticorrosion supplémentaire sous forme d'un manchon doué de reprise dimensionnelle à chaud soumis à une reprise dimensionnelle directement sur la jonction entre les canalisations, l'eau de mer permettant le passage du courant de protection cathodique jusqu'à n'importe quelles fissures dans n'importe lequel des revêtements anticorrosion.

4. Dispositif suivant l'une quelconque des revendications précédentes, dans lequel le substrat allongé consiste en pipelines immergés, de préférence en pipelines sous-marins immergés.

5. Dispositif suivant l'une quelconque des revendications précédentes, dans lequel le boîtier est fixé au substrat allongé au moyen d'un manchon thermorétractable.

6. Dispositif suivant la revendication 5, dans lequel le boîtier comprend une matière thermorétractable.

7. Dispositif suivant la revendication 5 ou 6, dans lequel le boîtier est revêtu sur la surface tournée vers le substrat d'une couche d'une matière d'étanchéité.

8. Dispositif suivant l'une quelconque des revendications précédentes, dans lequel l'orifice est sous forme d'une fente s'étendant essentiellement dans la direction longitudinale par rapport au boîtier.

9. Dispositif suivant la revendication 2 ou suivant l'une quelconque des revendications en dépendant, dans lequel le boîtier polymérique est marqué de moyens d'identification visibles ou reconnaissables.

10. Procédé de protection d'une jonction entre deux substrats allongés corrodables, portant un revêtement de lestage, qui ont été débarrassés du revêtement de lestage dans la zone de jonction, procédé consistant :

(i) à entourer la zone de jonction avec un boîtier creux, et

(ii) à fixer le boîtier au substrat allongé de manière à former un espace annulaire autour de la zone de jonction, au moins un orifice existant pour la pénétration et la sortie d'un fluide dans et hors de l'espace annulaire, procédé caractérisé en ce qu'il consiste également

(iii) à positionner une anode sur l'un des substrats à l'extérieur du boîtier, et

(iv) à immerger la zone de jonction dans l'eau de mer de sorte que l'eau de mer pénètre dans, et remplisse en grande partie, l'espace annulaire, en venant en contact avec toutes les parties exposées des substrats corrodables et en permettant le passage d'un courant de protection cathodique jusqu'auxdites pièces exposées.

**Patentansprüche**

1. Korrosionsschutzanordnung einer Verbindung zwischen zwei korrodierbaren, mit Beschwerungsüberzügen versehenen langgestreckten Substraten, die im Verbindungsbereich vom Beschwerungsüberzug befreit sind, wobei die Anordnung eine an dem langgestreckten Substrat um den Verbindungsbereich herum befestigte Kapsel umfaßt und der Verbindungsbereich in Meerwasser eintaucht, dadurch gekennzeichnet, daß die an dem Substrat befestigte Kapsel hohl ist und wenigstens eine Öffnung aufweist, so daß Meerwasser in die Kapsel ein- und aus ihr austritt, wobei es mit allen freiliegenden Teile der korrodierbaren Substrate in Kontakt gelangt und den Durchgang eines kathodischen Schutzstroms zu den freiliegenden Teilen zuläßt, und daß an einem der langgestreckten Substrate außerhalb der Kapsel eine Anode positioniert ist.

**2.** Anordnung nach Anspruch 1, wobei die Kapsel Polymermaterial umfaßt.

**3.** Anordnung nach einem der Ansprüche 1 bis 2, wobei die korrodierbaren Substrate unter dem Beschwerungsüberzug auch einen Korrosionsschutzüberzug tragen, der im Verbindungsbereich ebenfalls entfernt ist, jedoch innerhalb der Kapsel teilweise über den entfernten Beschwerungsüberzug hinaus verläuft, wobei die Anordnung eine zusätzliche Korrosionsschutzschicht in Form einer wärmerückstellbaren Hülse umfaßt, die direkt über der Verbindung zwischen den Rohren rückgestellt ist, wobei das Meerwasser den Durchgang des kathodischen Schutzstroms zu allen Defekten in allen Korrosionsschutzüberzügen zuläßt.

**4.** Anordnung nach einem der vorhergehenden Ansprüche, wobei die langgestreckten Substrate untergetauchte Rohrleitungen, vorzugsweise untergetauchte Unterwasser-Rohrleitungen umfassen.

**5.** Anordnung nach einem der vorhergehenden Ansprüche, wobei die Kapsel durch eine wärmeschrumpfbare Hülse an dem langgestreckten Substrat befestigt ist.

**6.** Anordnung nach Anspruch 5, wobei die Kapsel ein wärmeschrumpfbares Material umfaßt.

**7.** Anordnung nach Anspruch 5 oder 6, wobei die Kapsel auf der dem Substrat zugewandten Oberfläche mit einer Dichtmaterialschicht beschichtet ist.

**8.** Anordnung nach einem der vorhergehenden Ansprüche, wobei die Öffnung in Form eines im wesentlichen in Längsrichtung der Kapsel verlaufenden Schlitzes ausgebildet ist.

**9.** Anordnung nach Anspruch 2 oder einem darauf rückbezogenen Anspruch, wobei die polymere Kapsel mit sichtbaren oder erkennbaren Identifikationsmitteln gekennzeichnet ist.

**10.** Verfahren zum Schutz einer Verbindung zwischen zwei korrodierbaren, mit Beschwerungsüberzügen versehenen langgestreckten Substraten, die im Verbindungsbereich von der Beschwerungsschicht befreit sind, umfassend folgende Schritte:

(i) Umgeben des Verbindungsbereichs mit einer hohlen Kapsel, und

(ii) Befestigen der Kapsel an dem langgestreckten Substrat derart, daß um den Verbindungsbereich herum ein Ringraum gebildet wird, wobei wenigstens eine Öffnung für den Ein- und Austritt eines Fluids in den Ringraum vorhanden ist, dadurch gekennzeichnet, daß das Verfahren ferner folgende Schritte umfaßt:

(iii) Positionieren einer Anode an einem der Substrate außerhalb der Kapsel, und

(iv) Eintauchen des Verbindungsbereichs in Meerwasser derart, daß das Meerwasser in den Ringraum eintritt und ihn im wesentlichen ausfüllt, wobei es mit allen freiliegenden Teilen der korrodierbaren Substrate in Kontakt gelangt und den Durchgang eines kathodischen Schutzstroms zu den freiliegenden Teilen zuläßt.

Figure 1

Figure 2

EP 0 272 075 B1

Figure 3

Figure 4

EP 0 272 075 B1